# FASCICULE DE BREVET EUROPEEN

(11) **EP 4 522 352 B1**
(45) Date de publication et mention de la délivrance du brevet: **22.04.2026**
(21) Numéro de dépôt: 23725199.6
(22) Date de dépôt: 05.05.2023
(51) Int. Cl.: B21D 22/02, B21D 28/04, B21D 28/26, B21D 37/08, B21D 43/05, B21D 53/00, H01M 8/026, H01M 8/0206, H01M 8/0228, H01M 8/0247, H01M 8/0258, H01M 8/0254, H01M 8/10, H01M 8/0202, H01M 8/0267

(54) **PROCÉDÉ DE FORMAGE D'UNE PLAQUE POLAIRE DE PILE À COMBUSTIBLE ET INSTALLATION DE FORMAGE ASSOCIÉE**
VERFAHREN ZUR HERSTELLUNG EINER POLAREN PLATTE EINER BRENNSTOFFZELLE UND ZUGEHÖRIGE FORMUNGSANLAGE
METHOD FOR FORMING A POLAR PLATE OF A FUEL CELL, AND ASSOCIATED FORMING PLANT

(30) Priorité: 09.05.2022 FR 2204375
(43) Date de publication de la demande: 19.03.2025
(73) Titulaire: SYMBIO FRANCE, 69190 Saint-Fons (FR)
(72) Inventeur: BECKER, Marcel, Jacques, 25000 BESANCON (FR); JENDRZEJCZAK, Pascal, Paul, 03170 BIZENEUILLE (FR)
(74) Mandataire: Lavoix
(86) Numéro de dépôt international: PCT/EP2023/061929
(87) Numéro de publication internationale: WO 2023/217651

(56) Documents cités:
- EP-A1- 3 951 964
- US-A1- 2015 280 252
- US-A1- 2018 223 408
- US-A1- 2021 305 614

## Description

La présente invention concerne un procédé de formage d'une plaque polaire pour un séparateur bipolaire de pile à combustible, ainsi qu'une installation de formage mettant en oeuvre un tel procédé.

Une pile à combustible est un dispositif permettant de générer de l'électricité par réaction électrochimique entre un carburant, par exemple de l'hydrogène, et un comburant, par exemple de l'oxygène contenu dans l'air. On s'intéresse ici aux piles à combustible du type à membrane échangeuse de protons à électrolyte solide - dite aussi PEMFC en anglais -, qui comprennent habituellement un empilement de cellules élémentaires constituant chacune un générateur électrochimique.

Schématiquement, chaque cellule comprend deux plaques polaires, entre lesquelles sont agencés un élément cathodique et un élément anodique, lesquels sont séparés par un électrolyte solide sous la forme d'une membrane échangeuse d'ions, réalisée par exemple en un matériau polymère perfluoré sulfuré. Chaque plaque polaire comprend une face avant, avec une portion centrale dans laquelle sont ménagés des canaux de circulation de l'hydrogène et de l'oxygène, et un dos, opposé à la face avant. Dans une cellule, la face avant de chaque plaque polaire est orientée du côté de la membrane.

Pour deux cellules voisines, une plaque polaire d'une des deux cellules se retrouve dos à dos avec une plaque polaire de l'autre cellule. Ces deux plaques polaires forment ensemble un séparateur bipolaire, aussi appelé plaque bipolaire. Un circuit de refroidissement, dans lequel circule un liquide de refroidissement tel que de l'eau glycolée, est généralement aménagé entre les deux plaques polaires du séparateur bipolaire. L'hydrogène, l'air et le liquide de refroidissement sont des fluides qui sont apportés en continu à la pile à combustible pendant son fonctionnement. Des ouvertures sont ménagées dans chaque plaque polaire autour de la portion centrale pour laisser passer les fluides entre deux cellules voisines. Ainsi, chaque séparateur bipolaire assure d'un côté l'alimentation en carburant de la cellule adjacente à ce côté et de l'autre côté l'alimentation en comburant de la cellule adjacente à cet autre côté, les alimentations assurées par les séparateurs bipolaires se faisant en parallèle.

On s'intéresse ici aux plaques polaires métalliques, qui sont réalisés dans une tôle. Les ouvertures sont généralement ménagées par perforation, tandis que les canaux sont réalisés par emboutissage. Pour un bon fonctionnement de la pile à combustible, les plaques polaires présentent des épaisseurs très fines et des tolérances de fabrications très étroites. À titre d'ordre de grandeur, une plaque polaire est classiquement réalisée dans une tôle de 0,1 mm d'épaisseur, tandis que les canaux présentent chacun une profondeur de 0,2 mm à 0,3mm, avec une tolérance inférieure à 0,01 mm.

Pour réduire les couts de production, les plaques polaires sont fabriquées en série, à partir d'un feuillard enroulé sous forme de bobine, le feuillard étant perforé et embouti puis finalement découpé de manière à former chaque plaque polaire.

Il est connu de réaliser ces trois opérations, éventuellement subdivisées en sous-étapes, avec une presse de grande capacité comprenant plusieurs outils, qui forment ensemble un outillage de cette presse. Une telle presse comprend généralement un bâti, un coulisseau, qui est mobile par rapport au bâti, et une zone de travail, appelée table, qui est fixe par rapport au bâti et qui est agencée en regard du coulisseau. Les outils sont répartis le long de la table. Entre chaque opération de la presse, le feuillard est avancé d'un pas fixe le long de la table, de manière à le façonner progressivement. À titre d'ordres de grandeurs, une plaque polaire présente par exemple une largeur de 180 mm, tandis que la table présente une longueur comprise entre 1500 mm à 2000 mm, huit à dix outils étant typiquement répartis le long de la table.

Pour assurer chacune des opérations de manière satisfaisante, des trous de centrages sont ménagés dans le feuillard à intervalle réguliers, tandis que la presse comprend des pions, qui sont configurés pour être reçus dans les trous de centrage de manière à aligner le feuillard par rapport aux outils montés sur cette presse. Les trous de centrage sont ménagés en périphérie de la portion centrale.

Cependant, l'opération d'emboutissage déforme significativement le feuillard vers le centre de chaque portion centrale, ce qui entraine un décalage des trous de centrage. Ce décalage, aléatoire, peut atteindre 0,15 mm, voire plus, ce qui entraine une réduction de la qualité des opérations qui suivent l'emboutissage, notamment l'opération de découpage.

US-2018/223408-A1, US-2015/280252-A1, EP-3 951 9645-A1 et US-2021/305614-A1 décrivent chacun des procédés de formage de l'art antérieur.

C'est à ces problèmes qu'entend plus particulièrement remédier l'invention, en proposant un procédé de formage de plaque polaire offrant une meilleure précision.

À cet effet, l'invention concerne un procédé de formage d'une plaque polaire pour des cellules électrochimiques d'une pile à combustible, le procédé étant mis en oeuvre au moyen d'une installation de formage comprenant au moins une presse d'emboutissage, qui est configurée pour former les plaques polaires en série à partir d'un feuillard métallique, chaque plaque polaire étant ménagée dans un tronçon élémentaire du feuillard, la presse d'emboutissage comprenant :
- un coulisseau mobile agencé en regard d'une table fixe, le coulisseau étant déplacé par un dispositif d'actionnement entre une position haute et une position basse, le coulisseau et la table délimitant ensemble un volume de travail de la presse, et
- un outil d'emboutissage, qui est relié au coulisseau et qui est configuré pour emboutir en relief sur le feuillard, lorsque le coulisseau passe de sa position haute vers sa position basse, un réseau de canaux de circulation de fluides,
dans lequel :
- le procédé de formage comprend une étape dite d'emboutissage et une étape dite aval, postérieure à l'étape d'emboutissage et mise en oeuvre au moyen d'une presse dite aval, appartenant à l'installation de formage et distincte de la presse d'emboutissage, et
- lors de l'étape d'emboutissage, alors que le feuillard est reçu dans le volume de travail de la presse d'emboutissage, le coulisseau passe de sa position haute vers sa position basse et emboutit sur le feuillard un réseau de canaux de circulation de fluides.

Selon l'invention,
- une fois que le réseau de canaux est embouti sur le feuillard, pendant que le feuillard est maintenu serré dans l'outil d'emboutissage, un repère est formé dans le feuillard, à l'aide d'un outil de repérage porté par le coulisseau, et
- lors de l'étape aval, le feuillard est positionné par rapport à la presse aval au moyen d'organes de positionnement montés sur la presse aval et qui coopèrent avec le repère.

Grâce à l'invention, le repère formé au cours de l'étape d'emboutissage est positionné après que le feuillard ait été déformé par l'outil d'emboutissage. Au cours des étapes aval le feuillard est positionné au moyen de ce repère, aussi le façonnage réalisé pendant les étapes avals est positionné avec plus de précisions par rapport au réseau de canaux. La qualité globale de la plaque polaire, notamment en termes de précision dimensionnelles, est ainsi améliorée.

Selon des aspects avantageux mais non obligatoires de l'invention, un tel procédé de formage peut incorporer une ou plusieurs des caractéristiques suivantes prises isolément ou selon toute combinaison techniquement admissible :
- Le repère est formé dans le feuillard alors que le coulisseau est maintenu en position basse pendant un intervalle de temps prédéterminé, tandis que l'outil d'emboutissage exerce sur le feuillard un effort prédéterminé.
- L'intervalle de temps prédéterminé est supérieur à 0,2 s, de préférence supérieur à 0,3 s, de préférence encore supérieur à 0,4 s.
- l'effort prédéterminé est compris entre 150 kN et 300 kN, de préférence compris entre 170 et 250 kN, de préférence encore compris entre 180 et 200 kN.
- Le procédé de formage comprend une étape dite amont, qui est antérieure à l'étape d'emboutissage et au cours de laquelle on forme un repère primaire dans le feuillard, à l'aide d'un outil de repérage primaire appartenant à l'installation de formage, tandis qu'à l'étape d'emboutissage, le feuillard est positionné par rapport à la presse d'emboutissage au moyen d'organes de positionnement montés sur la presse d'emboutissage et qui coopèrent avec le repère primaire.
- L'outil de repérage primaire est monté sur le coulisseau d'une presse amont, qui fait partie de l'installation de formage et qui est distincte de la presse d'emboutissage.

L'invention concerne aussi une installation de formage de plaques bipolaires, l'installation de formage étant configurée pour mettre en oeuvre le procédé de formage conforme à ce qui est décrit ci-dessus et comprenant plusieurs presses, les presses incluant au moins une presse d'emboutissage, qui est configurée pour mettre en oeuvre une étape d'emboutissage, et une presse aval, qui est configurée pour mettre en oeuvre une étape aval, postérieure à l'étape d'emboutissage, dans laquelle :
- chaque presse comprend un coulisseau mobile agencé en regard d'une table fixe, le coulisseau étant déplacé par un dispositif d'actionnement entre une position haute et une position basse, le coulisseau et la table délimitant ensemble un volume de travail de la presse correspondante,
- la presse d'emboutissage comprend :
   - un outil d'emboutissage, qui est relié au coulisseau correspondant et qui est configuré pour emboutir en relief sur le feuillard, lorsque le coulisseau correspondant passe de sa position haute vers sa position basse, un réseau de canaux de circulation de fluides, et
   - un outil de repérage, qui est porté par le coulisseau et qui est configuré pour former un repère sur le feuillard une fois que le réseau de canaux est imprimé sur le feuillard, pendant que le feuillard est maintenu serré dans l'outil d'emboutissage,
- la presse aval comprend des organes de positionnement, qui sont montés sur la presse aval et qui sont configurés pour coopérer avec les repères formés sur le feuillard, de manière à positionner le feuillard par rapport à la presse aval.

L'invention sera mieux comprise, et d'autres avantages de celle-ci apparaîtront plus clairement à la lumière de la description qui va suivre, d'un mode de réalisation d'un procédé de formage et d'une installation de formage, conformes à son principe, donnée uniquement à titre d'exemple et faite en référence aux dessins annexés, dans lesquels :
- [Fig 1] la figure 1 est une vue en perspective d'une installation de formage de plaques polaires ;
- [Fig 2] la figure 2 est une vue en perspective d'une plaque polaire, représentée schématiquement ;
- [Fig 3] la figure 3 est une représentation schématique d'étapes d'un procédé de formage mis en oeuvre avec l'installation de formage de la figure 1;
- [Fig 4] la figure 4 représente à plus grande échelle, sur trois inserts a) à c), les cadres IVa, IVb et IVc à la figure 3, et
- [Fig 5] la figure 5 est une coupe en perspective d'une presse de l'installation de formage de la figure 1.

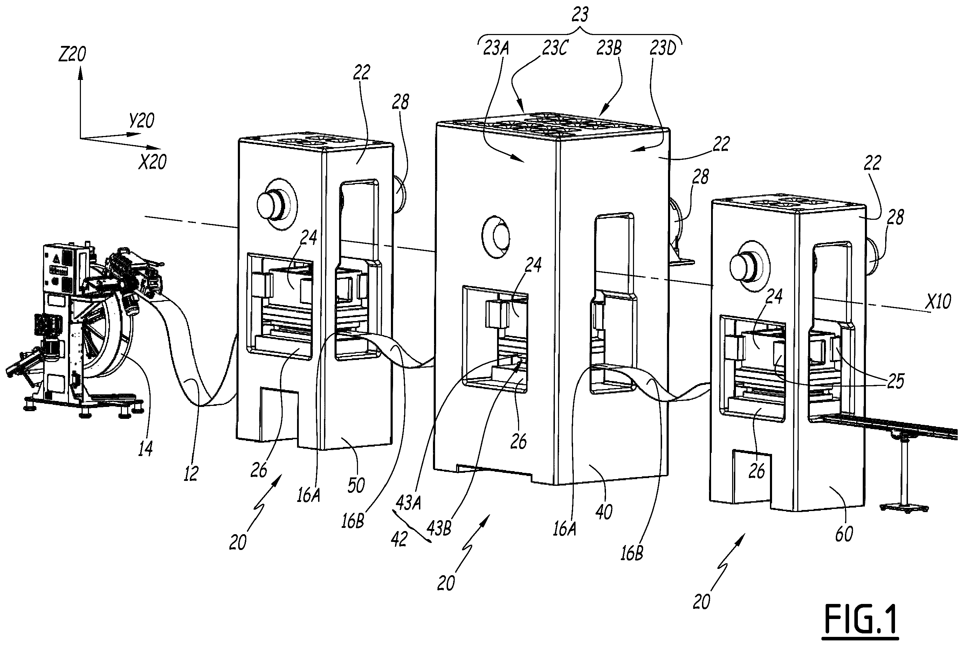

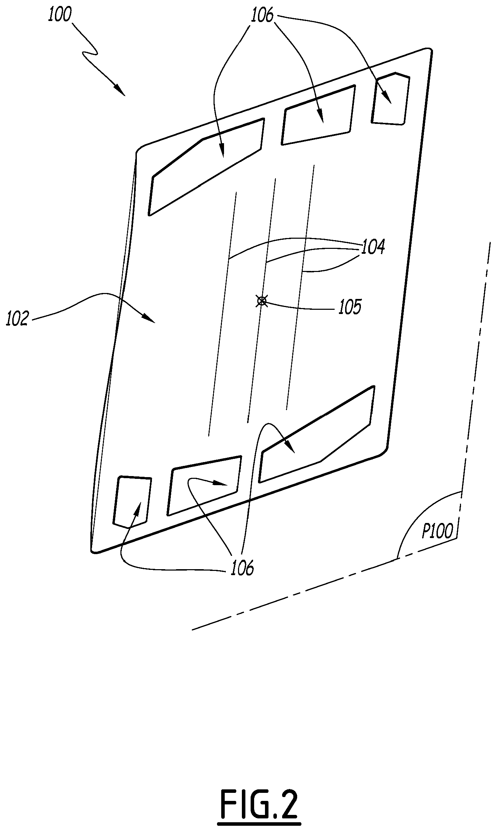

Une installation de formage 10 est représentée à la figure 1. L'installation de formage 10 est configurée pour former des plaques polaires pour des cellules électrochimiques d'une pile à combustible. Une plaque polaire 100 est représentée à la figure 2.

La plaque polaire 100 est fabriquée dans une tôle métallique, par exemple en acier inoxydable. La plaque polaire 100 présente une forme globalement rectangulaire et s'étend selon un plan de plaque P100. La plaque polaire 100 comprend une portion centrale 102, dans laquelle est ménagé un réseau de canaux 104 de circulation d'un fluide nécessaire au fonctionnement de la pile à combustible. Ce fluide est par exemple l'un parmi de l'hydrogène, de l'air, et de l'eau glycolée. Le réseau de canaux 104 est représenté schématiquement par trois traits. On définit un centre 105 du réseau de canaux 104 comme étant un barycentre géométrique du réseau de canaux 104. Dans l'exemple illustré la plaque polaire 100 présente une forme de rectangle, tandis que le centre 105 est situé, schématiquement, à l'intersection des diagonales de ce rectangle.

La plaque polaire 100 comprend aussi des perforations 106, qui sont ménagées en périphérie de la portion centrale 102 et qui sont prévues pour le passage des fluides d'un côté à l'autre de la plaque polaire 100. Dans l'exemple illustré, les performations 106 sont réparties en deux groupes de trois perforations, la forme et l'agencement des perforations 106 n'étant pas limitatif.

L'installation de formage 10 est configurée pour former les plaques polaires 100 en série à partir d'un feuillard 12. Le feuillard 12 est une bande métallique, qui est généralement transportée enroulée, sous la forme d'un rouleau 14. Le rouleau 14 est déroulé en entrée de l'installation de formage 10, le feuillard 12 étant façonné dans l'installation de formage 10, c'est-à-dire mis en forme et découpé dans les presses de l'installation de formage 10, pour former les plaques polaires 100. Chaque plaque polaire 100 est ainsi ménagée dans un tronçon élémentaire 13 du feuillard 12 et correspond, aux chutes et pertes de matériau près générées au cours du façonnage, à un tronçon élémentaire 13 du feuillard 12.

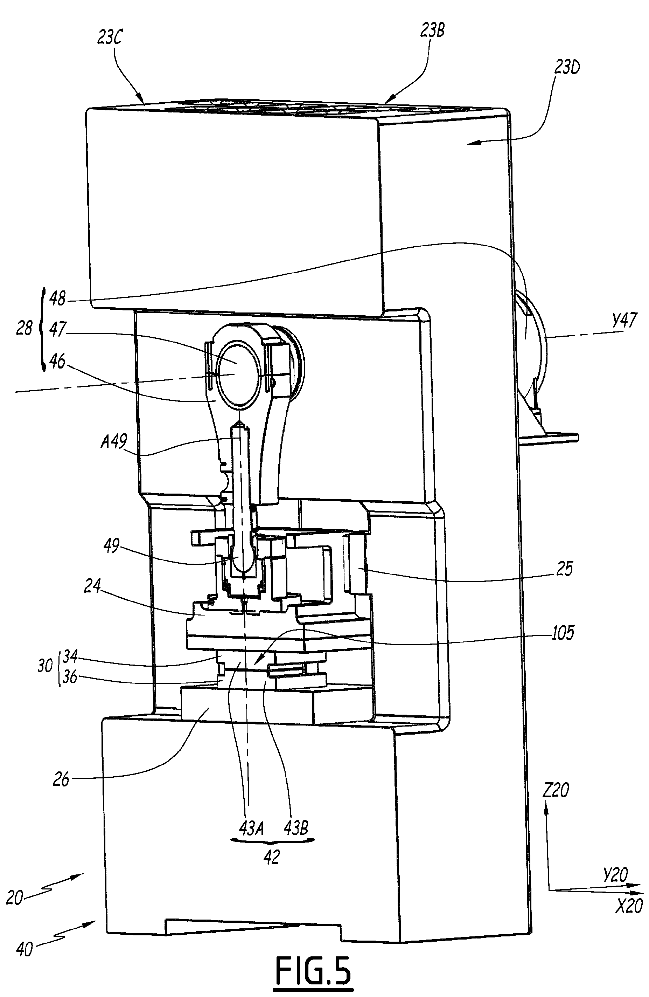

L'installation de formage 10 comprend trois presses 20 distinctes. Chaque presse 20 comprend un bâti 22, qui présente globalement une forme de parallélépipède allongé, qui s'étend selon un axe de hauteur Z20. Lorsque la presse 20 est en configuration de fonctionnement, le bâti 22 est posé sur un sol, l'axe de hauteur Z20 étant orthogonal au sol. Le sol est supposé être horizontal, aussi l'axe de hauteur Z20 est supposé être vertical. Le bâti 22 comprend quatre faces périphériques 12, parmi lesquelles une face avant 23A, une face arrière 23B opposée de la face avant 23A, une face amont 23C et une face aval 23D, opposée de la face amont 23C et orthogonale aux faces avant 23A et arrière 23B. Sur les figures 1 et 5, les presses 20 sont représentées en perspective, la face avant 23A de chaque presse étant orientée vers la gauche des figures, tandis que la face aval 23D est orientée vers la droite.

Pour chaque presse 20, les faces avant 23A et arrière 23B sont orthogonales à un axe de profondeur Y20 de la presse, tandis que les faces amont 23C et aval 23D sont orthogonales à un axe transverse X20 de la presse, les trois axes transverse X20, de profondeur Y20 et de hauteur Z20 étant orientés pour former un repère direct.

Chaque presse 20 comprend un coulisseau 24, qui est mobile par rapport au bâti 22, le coulisseau 24 étant guidé en translation par rapport au bâti 22 selon l'axe de hauteur Z20, ici au moyen de glissières 25 qui sont visibles à la figure 5. Chaque presse 20 comprend aussi une table 26, qui est fixe par rapport au bâti 22 et qui est agencée en regard du coulisseau 24 correspondant, le coulisseau 24 et la table 26 délimitant ensemble un volume de travail V20 de la presse 20. En configuration de fonctionnement de la presse 20, la table 26 est située sous le coulisseau 24.

Chaque presse 20 comprend aussi un dispositif d'actionnement 28, qui déplace le coulisseau 24 entre ses positions haute et basse. Le coulisseau 24 est plus proche de la table 26 en position basse qu'en position haute. Par extension, chaque presse 20 est dans une configuration basse, respectivement dans une configuration haute, lorsque le coulisseau 24 correspondant est dans sa position basse, respectivement dans sa position haute. Chaque presse 20 passe de sa configuration haute à sa configuration basse lorsqu'elle est dite déclenchée, et revient ensuite dans sa configuration haute au bout d'un intervalle de temps prédéterminé.

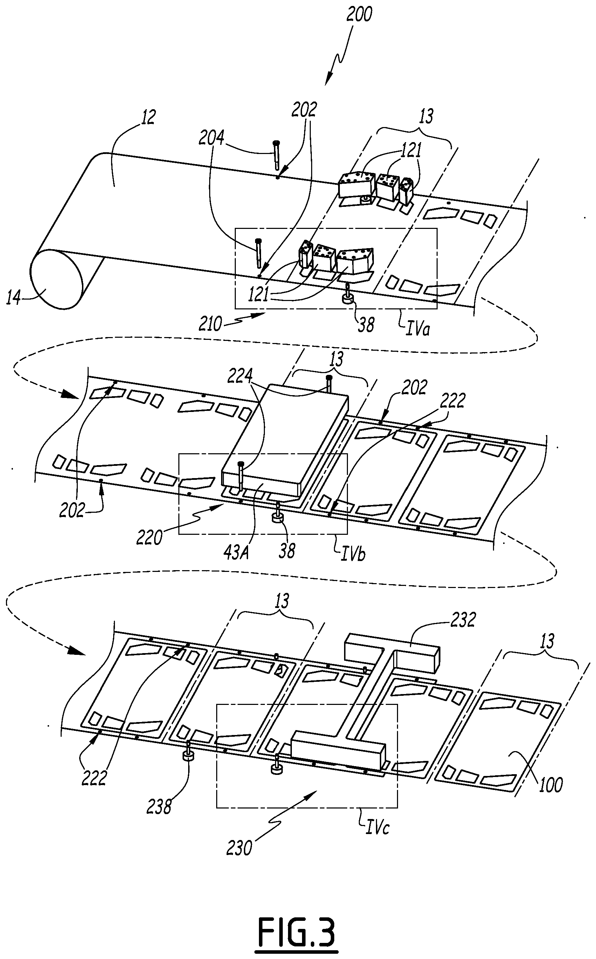

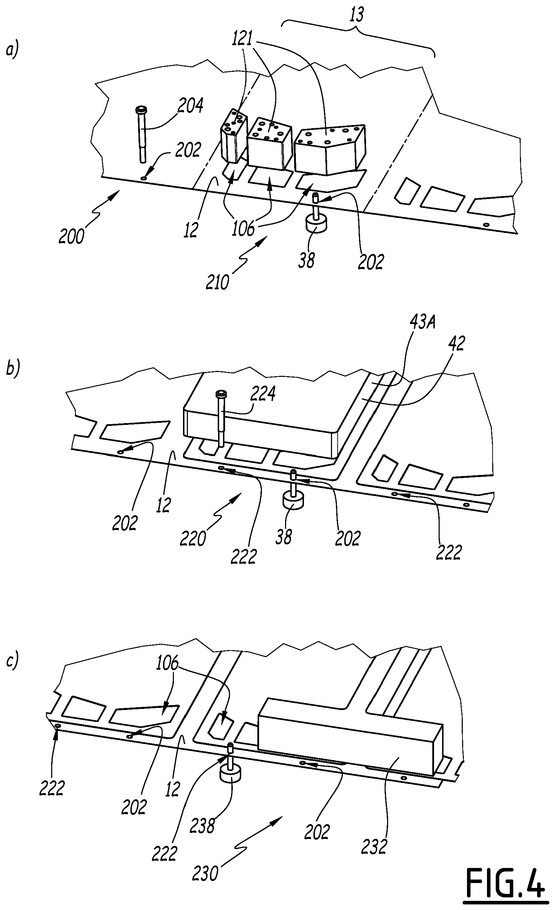

Chaque presse 20 est équipée d'un outillage 30 de façonnage du feuillard 12. Comme illustré aux figures 3 et 4, le façonnage du feuillard 12 se fait plusieurs étapes successives, chacune de ces étapes étant réalisée à l'aide d'un outil spécifique, monté sur l'une des presses 20. L'ensemble des outils de façonnage montés sur une même presse 20 constitue un outillage 30 de cette presse 20. L'outillage 30 de chaque presse 20 comprend donc, selon les cas, un ou plusieurs outils de façonnage. Par « façonnage », on entend une opération qui déforme le feuillard, par exemple une déformation plastique, une découpe, un perçage, etc. Une simple déformation élastique, une opération d'inspection ou de nettoyage ne sont donc pas considérées comme du façonnage.

Les trois presses 20 sont alignées les unes par rapport aux autres, plus précisément les axes transverses X20 des trois presses 30 sont alignés, celle des trois presses 20 qui est située entre les deux autres étant dite « presse intermédiaire 40 ». Celle des presses 20 agencée en regard de la face amont 23C de la presse intermédiaire 40 est dite « presse amont 50 », tandis que la troisième presse 20, qui est agencée en regard de la face aval 23D de la presse intermédiaire 40, est dite « presse aval 60 ».

En figure 5, la presse intermédiaire 40 est représentée en coupe selon un plan orthogonal à l'axe de profondeur Y20, révélant l'intérieur de la presse intermédiaire 40. Pour chaque presse 20, chaque outil - et par extension chaque outillage 30 - de cette presse comprend une portion mobile 34, qui est portée par le coulisseau 24 correspondant, et une portion fixe 36, fixée en regard de la portion mobile 32 sur la table 26 correspondante. Chaque portion mobile 34 délimite, avec la portion fixe 36 associée, une zone de travail de la presse 20 correspondante, chaque zone de travail étant configurée pour recevoir un tronçon élémentaire 13 du feuillard 12.

On détaille à présent les étapes du procédé de formage du feuillard 12. Sur la figure 3, on trouve, en entrée du procédé de formage, un rouleau 14, qui est déroulé, le feuillard 12 avançant progressivement, l'avancée du feuillard 12 étant représenté de gauche à droite et de haut en bas.

Au cours d'une première étape 200 dite « de repérage primaire », on forme un repère primaire 202 dans le feuillard 12, à l'aide d'un outil de repérage primaire 204 appartenant à l'installation de formage 10. L'outil de repérage primaire 204 comprend ici deux poinçons de perforation, tandis que le repère primaire 202 est ici formé de deux trous, chacun agencé le long d'un bord respectif du feuillard. Selon une alternative non représentée, le repaire primaire 204 est obtenu par déformation plastique du feuillard 12, par exemple par poinçonnage. Cependant, le repère primaire 202 est de préférence formé d'un ou plusieurs trous.

L'outil de repérage primaire 204 est ici monté sur le coulisseau 24 de la presse amont 50. Le repère primaire 202 est ainsi formé sur le feuillard 12 à chaque fois que le coulisseau 24 de la presse amont 50 passe de sa position haute à sa position basse, autrement dit à chaque fois que la presse amont 50 est activée et passe de sa configuration haute à sa configuration basse. Ainsi, de préférence, un repère primaire 202 est formé pour chaque tronçon élémentaire 13 du feuillard 12.

Entre chaque déclenchement de la presse amont 50, une fois que la presse amont 50 est revenue dans sa configuration haute, le feuillard 12 est déplacé par rapport à la presse amont 50 selon un mouvement d'avancement du feuillard 12 le long de la table 26, parallèlement à l'axe X20. Le mouvement d'avancement du feuillard 12 est un mouvement séquentiel, avec un incrément d'avancement égal à une longueur de chaque tronçon élémentaire 13 mesurée le long du feuillard 12, parallèlement à l'axe X20, et une fréquence d'avancement prédéterminée. Le mouvement d'avancement du feuillard 12 définit une direction amont-aval de l'installation de formage 10. Généralement, la fréquence d'avancement est égale à la fréquence de déclenchement de la presse.

La presse amont 50, et plus généralement chaque presse 20, comprend un dispositif d'avancement du feuillard 12, configuré pour contrôler un mouvement d'avancement du feuillard 12 le long de la table 26 correspondante. Le dispositif d'avancement n'est pas représenté. Le mouvement d'avancement du feuillard 12 est de préférence synchronisé pour chaque presse 20, chaque presse 20 étant configurée pour déplacer le coulisseau 24 correspondant en position basse après chaque mouvement d'avancement.

La presse amont 50 comprend aussi des organes de positionnement 38, qui sont configurés pour coopérer avec le repère primaire 202 ménagé dans le feuillard 12 de manière à positionner le feuillard 12 par rapport à la presse amont 50, après chaque mouvement d'avancement du feuillard 12. Les organes de positionnement 38 sont ici réalisés par des doigts de positionnement, qui sont insérés dans les trous des repères primaires 202. Les doigts de positionnement sont de préférence coniques. On obtient ainsi un positionnement précis et répétable du feuillard 12 par rapport aux outils 30 de la presse amont 50. Les organes de positionnement 38 peuvent être mobiles, notamment selon la direction de l'axe Z20, avec un mouvement alternatif ayant la même fréquence que la fréquence de déclenchement de la presse.

Ensuite, après l'étape de repérage primaire 200, au cours d'une étape 210 dite de perforation, les perforations 106 sont ménagées au travers de du feuillard 12, au moyen d'un outil de perforation 121. L'étape de perforation 210 est donc une étape de façonnage. L'outil de perforation 121 comprend ici six poinçons, qui sont chacun configurés pour ménager une perforation 106 respective. Les poinçons sont montés sur le coulisseau 24 de la presse amont 50 et sont configurés pour coopérer avec une matrice fixée à la table 26 de la presse amont 26. La matrice n'est pas représentée.

Au cours de l'étape de perforation 210, les organes de positionnement 38 permettent ainsi un bon alignement du feuillard 12 par rapport aux poinçons servant à former les perforations 106, et par extension par rapport à l'outil de perforation 121.

L'étape de repérage primaire 200 et l'étape de perforation 210 sont par exemple deux étapes qui correspondent chacune à un déclenchement distinct de la presse amont 50. L'étape de repérage primaire 200 et l'étape de perforation 210 sont par exemple deux étapes qui correspondent chacune à un parmi deux déclenchements distincts immédiatement successifs de la presse amont 50.

Ensuite, après l'étape de perforation 210, au cours d'une étape dite d'emboutissage 220, on emboutit le feuillard 12, autrement dit on déforme plastiquement le feuillard 12, de manière à y imprimer en relief le réseau de canaux 104 de circulation des fluides, au moyen d'un outil d'emboutissage fixé au coulisseau 24 de la presse correspondante. L'étape d'emboutissage 220 est donc une étape de façonnage. Typiquement, l'outil d'emboutissage comprend deux matrices de forme complémentaires, qui sont positionnées de part et d'autre de la pièce à emboutir, ici le feuillard 12. L'étape d'emboutissage 220 est ici mise en oeuvre par la presse intermédiaire 40, qui est donc une presse d'emboutissage, dont les outils 30 incluent un outil d'emboutissage 42, qui comprend une matrice mobile 43A, qui est fixée au coulisseau 24 par un dispositif de fixation, et une matrice complémentaire 43B portée par la table 26. Le dispositif de fixation n'est pas représenté. Classiquement, le dispositif de fixation ménage une zone d'appui entre la matrice mobile 43A et le coulisseau 24, cette zone d'appui étant plane.

Au cours de l'étape d'emboutissage 220, le feuillard 12 tend à se déformer, aussi le repère primaire 202, formé sur le feuillard 12, se déplace par rapport à sa position d'origine sur le feuillard 12 et ne peut plus remplir son rôle de référence. Pour pallier ce problème, au cours de l'étape d'emboutissage 220, une fois que le réseau de canaux 104 est formé par emboutissage sur le feuillard 12, alors que le feuillard 12 est maintenu serré dans l'outil d'emboutissage 42, ce qui correspond au fait que le coulisseau 24 correspondant est en position basse ou proche de sa position basse, un repère dit secondaire 222 est formé dans le feuillard, à l'aide d'un l'outil de repérage secondaire 224 porté par ce coulisseau 24. Dans l'exemple illustré, l'outil de repérage secondaire 224 comprend deux poinçons de perforation, tandis que le repère secondaire 222 est formé de deux trous, chacun agencé le long d'un bord respectif du feuillard 12. De manière générale, le repère secondaire 222 est de préférence formé d'un ou plusieurs trous dans le feuillard 12. De préférence, un repère secondaire 222 est formé pour chaque tronçon élémentaire 13 du feuillard 12

L'outil de repérage secondaire 224 comprend un autre dispositif d'actionnement, dit secondaire, qui est porté par le coulisseau 24 correspondant et qui déplace les poinçons de perforation pendant que le feuillard est maintenu serré dans l'outil d'emboutissage 42, de manière à former le repère secondaire 222 dans le feuillard 12. Le dispositif d'actionnement secondaire n'est pas représenté. Ainsi l'outil de repérage secondaire 224 est placé dans une position de travail lorsque le coulisseau 24 est en position basse ou proche de sa position basse, lorsque le feuillard 12 est maintenu serré dans l'outil d'emboutissage 42, le dispositif d'actionnement secondaire étant ensuite activé pour former le repère secondaire 222. Le repère secondaire 222 peut ainsi être formé sur le feuillard 12 au moment choisi par l'opérateur, tant que le feuillard 12 est maintenu serré dans l'outil d'emboutissage 42.

Le dispositif d'actionnement 28 de la presse intermédiaire 40 comprend un actionneur de pressage 46, qui déplace le coulisseau 24 correspondant entre ses positions haute et basse et qui est configuré pour exercer sur ce coulisseau 24 un effort de pressage lorsque ce coulisseau 24 est dans sa position basse et que le feuillard 12 est embouti par l'outil d'emboutissage 42. L'actionneur de pressage 46 comporte ici une bielle, qui est montée par une extrémité supérieure sur un arbre excentrique de manivelle 47 pivotant de manière excentrique autour d'un axe parallèle à l'axe de profondeur Y20. L'actionneur de pressage 46 est relié au coulisseau 24 par un point de connexion 49. Dans l'exemple, l'actionneur de pressage 46 comporte une bielle, qui est reliée, à son extrémité inférieure, au coulisseau 24 par une liaison pivot ou rotule formant le point de connexion 49 par lequel transite l'effort de pressage. Le dispositif d'actionnement 28 comprend aussi un servomoteur 48, qui est représenté ici par un cylindre dépassant de la face arrière 23B correspondante et qui est configuré pour contrôler les mouvements de rotation excentrique de l'arbre excentrique de manivelle 47. Autrement dit, le servomoteur 48 est configuré pour commander l'actionneur de pressage 46 afin que celui-ci entraine le coulisseau 24 dans un mouvement alternatif de translation selon l'axe vertical Z20, entre sa position haute et sa position basse, à une fréquence qui est la fréquence de déclenchement de la presse. De manière simplifiée, le dispositif d'actionnement 28 fonctionne comme un vilebrequin dont la rotation est contrôlée par le servomoteur, tandis que l'arbre excentrique de manivelle 47 entraine le coulisseau 24 selon un mouvement de va et vient entre ses positions hautes et basses. Schématiquement, l'effort de pressage est orienté selon un axe de pressage A49 qui est un axe parallèle à l'axe de hauteur Z20 et qui passe par le point de connexion 49 entre l'actionneur de pressage 46 et le coulisseau 24. Avantageusement, l'axe de pressage A49 est agencé de manière à traverser, au cours de l'étape d'emboutissage 220, le réseau de canaux 104 formé sur le feuillard. De préférence, l'axe de pressage A49 est aligné sur le centre 105 du réseau de canaux 104. Dans l'exemple illustré, l'outil d'emboutissage 42 est placé à la verticale au-dessous de l'actionneur de pressage 46, notamment à la verticale au-dessous du point connexion 49 de l'actionneur de pressage 46 avec le coulisseau 24.

Selon des exemples, l'outil d'emboutissage 42 est placé au centre du volume de travail de la presse intermédiaire 40. Ainsi, les éventuelles déformations du bâti 22 au cours de l'étape d'emboutissage sont réparties symétriquement autour de l'axe de pressage A49, ce qui contribue à l'homogénéité de l'effort de pressage lors de la formation du réseau de canaux 104, et donc contribue à la qualité de l'emboutissage.

À cet effet, la presse intermédiaire 40 comprend avantageusement un nombre impair d'actionneurs de pressage 46. En particulier, la presse intermédiaire 40 comprend, de préférence, un seul actionneur de pressage 46. Lorsque la presse intermédiaire 40 comprend un seul actionneur de pressage 46, cet actionneur de pressage 46 est ainsi agencé au-dessus de la zone de travail, aligné avec le milieu de la zone de travail selon l'axe de hauteur Z20. Lorsque la presse intermédiaire 40 comprend plusieurs actionneurs de pressage 46, par exemple trois, les actionneurs de pressage 46 sont répartis le long de l'arbre 47, l'un des actionneurs de pressage 46 étant sensiblement situé au milieu de l'arbre 47 et étant aligné avec le milieu de la zone de travail selon l'axe de hauteur Z20.

De manière générale, dans les presses de l'art antérieur, la table présente en son centre une ouverture, prévue pour évacuer les copeaux de matière générés pendant les opérations de façonnages. Or cette ouverture tend à réduire la raideur de la table, qui tend à fléchir au cours du fonctionnement de la presse, cette flexion réduisant la précision de l'opération d'emboutissage.

De préférence, la table 26 de la presse intermédiaire 40 est une table dite pleine, sans ouverture centrale d'évacuation de copeaux, par exemple ménagée dans un bloc de métal massif. Bien entendu au besoin des trous taraudés ou équivalent son ménagés dans la table pour la fixation des outils de façonnage.

Au cours du mouvement de va et vient du coulisseau 24 entre ses positions haute et basse, le coulisseau 24 atteint des positions extrêmes, spécifiquement atteint une position basse et une position haute. Dans le cas de l'étape d'emboutissage 220, alors que le coulisseau 24 passe de la position haute vers la position basse, on comprend que le feuillard 12, pris entre les deux matrices mobile 43A et fixe 43B de l'outil d'emboutissage 42, est serré entre ces deux matrices 43A et 43B avant que le coulisseau 24 n'atteigne la position basse. À mesure que le coulisseau 24 se rapproche de la position basse, l'effort de serrage des matrices 43A et 43B - et par extension l'effort de pressage de l'actionneur de pressage 46 - augmente progressivement, déformant plastiquement le feuillard 12 de manière à imprimer en relief le réseau de canaux 104. L'effort de serrage atteint un maximum lorsque le coulisseau 24 atteint sa position basse. Ensuite, le coulisseau 24 commence à remonter. Le feuillard 12, serré entre les deux matrices 43A et 43B, commence par se relâcher élastiquement à mesure que les deux matrices 43A et 43B s'éloignent l'une de l'autre. L'effort de serrage décroit progressivement, jusqu'à s'annuler. Ainsi, l'effort de serrage du feuillard 12 par l'outil d'emboutissage 42 est appliqué non seulement lorsque le coulisseau 24 est en position basse, mais pour une gamme de position autour de cette position basse, qui sont dites proches de la position basse.

Les mouvements du coulisseau 24 étant contrôlés par le servomoteur 48, on comprend que le servomoteur 48 permet de contrôler notamment la vitesse de descente du coulisseau, la vitesse de remontée du coulisseau, ainsi que l'intervalle de temps pendant lequel le feuillard 12 est maintenu serré dans l'outil d'emboutissage 42 ou bien encore l'effort de serrage - ou de pressage - subi par le feuillard 12 pendant cet intervalle de temps.

De préférence, au cours de l'étape d'emboutissage 220, l'effort de pressage est maintenu, par le servomoteur 48, pendant un intervalle de temps prédéterminé, et à une valeur prédéterminée, lorsque le coulisseau 24 est en position basse ou proche de sa position basse, l'outil de repérage secondaire 224 étant déclenché pendant cet intervalle de temps, de manière à former le repère secondaire 222 dans le feuillard 12. L'intervalle de temps prédéterminé pendant lequel l'effort de pressage est maintenu est dit « temps de maintien », tandis que la valeur prédéterminée de l'effort de pressage est dit « effort de maintien ».

On s'assure ainsi que les effets transitoires de l'emboutissage, notamment les vibrations de la presse intermédiaire 40 et le retour élastique du feuillard 12, sont terminés avant de former le repère secondaire 222 sur le feuillard 12. Le repère secondaire 222 est ainsi placé avec plus de précision sur le feuillard 12.

Le temps de maintien est choisi supérieur à 0,2 s (seconde), de préférence supérieur à 0,3 s, de préférence encore supérieur à 0,4 s, tandis que l'effort de maintien est compris entre 150 kN (kilo Newton) et 300 kN, de préférence comprise entre 170 et 250 kN, de préférence encore comprise entre 180 et 200 kN.

On peut avantageusement prévoir, de rétracter, pendant le temps de maintien, les organes de positionnement 38 qui coopèrent avec le repérage primaire, ceci pour éviter une usure anormale et des pollutions générées par la déformation du feuillard 12 pendant l'opération d'emboutissage 220. Les organes de positionnement 38 peuvent être réengagés après l'expiration du temps de maintien notamment pour la fin du transfert du feuillard 12 dans la presse intermédiaire 40.

Selon des modes de réalisation, le servomoteur 48 est ralenti alors que le coulisseau 24 approche de sa position basse, de manière à maintenir l'outil d'emboutissage 42 serré sur le feuillard 12. Bien entendu, le mode de contrôle de la presse intermédiaire 40 dépend de la technologie utilisée pour cette presse, et le spécialiste saura transposer l'exemple décrit ici à des presses d'autres technologies.

À titre de comparaison, l'effort de pressage nécessaire pour emboutir le feuillard 12, autrement dit l'effort d'emboutissage, est de l'ordre de 200 tonnes, ou environ 2000 kN. On garantit ainsi un bon positionnement du repère secondaire 222, tout en évitant de trop solliciter le servomoteur 48.

Ensuite, une fois que le repère secondaire 222 est formé sur le feuillard 12, la presse intermédiaire 40 reprend sa configuration haute, et le feuillard 12 est déplacé selon le mouvement d'avancement.

Le procédé de formage comprend une étape 230 de découpage du feuillard 12, qui est postérieure à l'étape d'emboutissage 220 et au cours de laquelle le feuillard 12 est finalement découpé, formant ainsi le plaque polaire 100. Le découpage est donc une étape de façonnage, qui se fait ici à l'aide d'un outil de découpe 232, qui sépare chaque tronçon élémentaire 13 du feuillard 12.

Le cas échéant, le procédé de formage comprend d'autres étapes de façonnage postérieures à l'étape d'emboutissage 220, par exemple des étapes pré-découpage, de reprise des perforations 106, etc. Les étapes de façonnage postérieures à l'étape d'emboutissage sont dites « des étapes aval » du procédé de formage, l'étape de découpage 230 étant un exemple particulier d'étape aval. Ainsi le procédé de formage comprend au moins une étape aval.

La ou les étapes avals sont de préférence réalisées dans la presse aval 60. Avantageusement, au cours d'au moins une étape aval, le feuillard 12 est positionné par rapport à la presse aval 60 au moyen d'organes de positionnement 238 dit secondaires, qui sont montés sur la presse aval 60 et qui coopèrent avec le repère secondaire 222, notamment par complémentarité de forme, de manière à positionner le feuillard 12 par rapport à la presse aval 60. Les organes de positionnement secondaires 238 sont ici représentés par des doigts de positionnement, qui sont reçus dans les trous du repère secondaire.

De préférence, le repère secondaire 222 est utilisé pour positionner le feuillard 12 au cours de chacune des étapes avals. En corollaire, seule l'étape d'emboutissage 220 est réalisée dans la presse intermédiaire 40, l'étape d'emboutissage 220 incluant de préférence le formage du repère secondaire 222. Autrement dit, l'outillage de la presse intermédiaire 40 inclut, outre l'outil d'emboutissage 42, l'outil de repérage secondaire 224.

Généralement, lors de la conception de l'installation de formage 10, chaque presse 20 est conçue pour exercer un effort de pressage maximal, dit effort nominal, qui est fonction notamment de l'effort maximal nécessaire pour effectuer la tâche à laquelle cette presse 20 est destinée et d'un coefficient de sécurité.

Dans les installations de formage selon l'art antérieur, la presse d'emboutissage effectue en général d'autres étapes de façonnage, en particulier des opérations de perforation et de découpage. Ces presses de l'art antérieur sont ainsi dimensionnées pour exercer un effort de pressage nominal allant de 800 à 1000 tonnes, ou de 8 à 10 MN (Méga Newton).

Dans l'installation de formage 10, les étapes aval sont réalisés par la presse aval 60, tandis que les étapes antérieures à l'étape d'emboutissage 220, dites étapes amonts, sont réalisées par la presse amont 50.

En particulier, l'étape de repérage primaire 200 est réalisée par la presse amont 50, lequel l'outil de repérage primaire 204 étant monté sur le coulisseau 24 de la presse amont 50. De même, dans l'exemple illustré, l'étape de perforation 210 est elle-aussi réalisée par la presse amont 50.

Ainsi, dans l'installation de formage 10, l'effort de pressage de la presse aval 40 ne sert qu'à l'étape d'emboutissage 220. La presse intermédiaire 40 est conçue pour générer un effort de pressage nominal inférieur à 4 MN, soit environ 400 tonnes. De préférence, l'effort de pressage nominal est inférieur à 3 MN, de préférence encore inférieur à 2 MN. La presse intermédiaire 40 est bien moins couteuse qu'une presse utilisée dans une installation de formage de l'art antérieur.

On appelle portion interne 16A une portion du feuillard 12 qui est reçue dans le volume de travail d'une presse 30, tandis qu'une portion du feuillard 12 située entre deux presses 30 voisines est une portion externe 16B du feuillard 12. Sur la figure 1, le feuillard 12 comprend donc trois portions internes 16A et deux portions externes 16B. L'installation de formage 10 comprend des organes de tensionnement, qui sont agencées entre deux presses 30 voisines et qui sont configurés pour maintenir tendue les portions internes 16A du feuillard 12, tout en maintenant relâchée les portions externes 16B du feuillard 12. Les organes de tensionnement ne sont pas représentés. En pratique, il peut s'agir de transferts à pinces, dits « numériques », se déplaçant dans l'axe X20 de la valeur du tronçon élémentaire 13 avec un mouvement dans l'axe Z20 de l'ordre de 5 mm.

Selon des exemples, les organes de tensionnement sont combinés avec les organes d'avancement.

Les portions externes 16B étant détendues, on évite la transmission de contraintes mécaniques, le long du feuillard 12, entre deux presses 30 consécutives. En particulier, l'étape d'emboutissage 220 ayant tendance à « tirer » sur le feuillard 12, les portions externes 16B détendues suppriment le risque de décaler le feuillard 12 par rapport aux outils des étapes amont et aval.

Les modes de réalisation et les variantes mentionnées ci-dessus peuvent être combinés entre eux pour générer de nouveaux modes de réalisation de l'invention.

## Revendications

1. Procédé de formage d'une plaque polaire (100) pour des cellules électrochimiques d'une pile à combustible, le procédé étant mis en oeuvre au moyen d'une installation de formage (10) comprenant au moins une presse d'emboutissage (40), qui est configurée pour former les plaques polaires en série à partir d'un feuillard (12) métallique, chaque plaque polaire étant ménagée dans un tronçon élémentaire (13) du feuillard, la presse d'emboutissage comprenant :
- un coulisseau (24) mobile agencé en regard d'une table (26) fixe, le coulisseau étant déplacé par un dispositif d'actionnement (28) entre une position haute et une position basse, le coulisseau et la table délimitant ensemble un volume de travail de la presse,
- un outil d'emboutissage (42), qui est relié au coulisseau et qui est configuré pour emboutir en relief sur le feuillard, lorsque le coulisseau passe de sa position haute vers sa position basse, un réseau de canaux (104) de circulation de fluides,
dans lequel :
- le procédé de formage comprend une étape dite d'emboutissage (220) et une étape dite aval (230), postérieure à l'étape d'emboutissage et mise en oeuvre au moyen d'une presse dite aval (60), appartenant à l'installation de formage (10) et distincte de la presse d'emboutissage (40),
- lors de l'étape d'emboutissage, alors que le feuillard (12) est reçu dans le volume de travail de la presse d'emboutissage, le coulisseau (24) passe de sa position haute vers sa position basse et emboutit sur le feuillard un réseau de canaux (104) de circulation de fluides,
le procédé de formage étant **caractérisé en ce que** :
- une fois que le réseau de canaux (104) est embouti sur le feuillard (12), pendant que le feuillard (12) est maintenu serré dans l'outil d'emboutissage (42), un repère (222) est formé dans le feuillard, à l'aide d'un outil de repérage (224) porté par le coulisseau,
- lors de l'étape aval (230), le feuillard est positionné par rapport à la presse aval (60) au moyen d'organes de positionnement (238) montés sur la presse aval et qui coopèrent avec le repère.

2. Procédé de formage selon la revendication 1, dans lequel le repère (222) est formé dans le feuillard (12) alors que le coulisseau (24) est maintenu en position basse pendant un intervalle de temps prédéterminé, tandis que l'outil d'emboutissage (42) exerce sur le feuillard un effort prédéterminé.

3. Procédé de formage selon la revendication 2, dans lequel l'intervalle de temps prédéterminé est supérieur à 0,2 s, de préférence supérieur à 0,3 s, de préférence encore supérieur à 0,4 s.

4. Procédé de formage selon l'une quelconque des revendications 2 ou 3, dans lequel l'effort prédéterminé est compris entre 150 kN et 300 kN, de préférence compris entre 170 et 250 kN, de préférence encore compris entre 180 et 200 kN.

5. Procédé de formage selon l'une quelconque des revendications 1 à 4, dans lequel :
- le procédé de formage comprend une étape dite amont (200), qui est antérieure à l'étape d'emboutissage (220) et au cours de laquelle on forme un repère primaire (202) dans le feuillard (12), à l'aide d'un outil de repérage primaire (204) appartenant à l'installation de formage (10),
- à l'étape d'emboutissage (220), le feuillard (12) est positionné par rapport à la presse d'emboutissage (40) au moyen d'organes de positionnement (38) montés sur la presse d'emboutissage et qui coopèrent avec le repère primaire.

6. Procédé de formage selon la revendication 5, dans lequel l'outil de repérage primaire (204) est monté sur le coulisseau (24) d'une presse amont (50), qui fait partie de l'installation de formage (10) et qui est distincte de la presse d'emboutissage (40).

7. Installation de formage (10) de plaques bipolaires (100), l'installation de formage étant configurée pour mettre en oeuvre le procédé de formage conforme à l'une quelconque des revendications 1 à 6 et comprenant plusieurs presses (30), les presses incluant au moins une presse d'emboutissage (40), qui est configurée pour mettre en oeuvre une étape d'emboutissage (220), et une presse aval (60), qui est configurée pour mettre en oeuvre une étape aval, postérieure à l'étape d'emboutissage, dans laquelle :
- chaque presse comprend un coulisseau (24) mobile agencé en regard d'une table (26) fixe, le coulisseau étant déplacé par un dispositif d'actionnement (28) entre une position haute et une position basse, le coulisseau et la table délimitant ensemble un volume de travail de la presse correspondante,
- la presse d'emboutissage (40) comprend :
• un outil d'emboutissage (42), qui est relié au coulisseau correspondant et qui est configuré pour emboutir en relief sur le feuillard (12), lorsque le coulisseau correspondant passe de sa position haute vers sa position basse, un réseau de canaux (104) de circulation de fluides, et
• un outil de repérage (224), qui est porté par le coulisseau (24) et qui est configuré pour former un repère (222) sur le feuillard une fois que le réseau de canaux est imprimé sur le feuillard, pendant que le feuillard (12) est maintenu serré dans l'outil d'emboutissage (42),
- la presse aval (60) comprend des organes de positionnement (238), qui sont montés sur la presse aval et qui sont configurés pour coopérer avec les repères (222) formés sur le feuillard, de manière à positionner le feuillard par rapport à la presse aval.

## Patentansprüche

1. Formgebungsverfahren einer polaren Platte (100) für elektrochemische Zellen einer Brennstoffzelle, wobei das Verfahren mittels einer Formgebungsanlage (10) implementiert wird, umfassend mindestens eine Tiefziehpresse (40), die konfiguriert ist, um die polaren Platten seriell aus einem Metallband (12) zu bilden, wobei jede polare Platte in einem elementaren Abschnitt (13) des Bands angeordnet ist, die Tiefziehpresse umfassend:
- einen bewegbaren Schieber (24), der gegenüber einem feststehenden Tisch (26) angeordnet, der durch eine Betätigungsvorrichtung (28) zwischen einer oberen und einer unteren Position bewegt wird, wobei der Schieber und der Tisch ein Arbeitsvolumen der Presse begrenzen,
- ein Prägewerkzeug (42), das mit dem Schieber verbunden und konfiguriert ist, um ein Netz von Fluidzirkulationskanälen (104) erhaben in das Band zu prägen, wenn der Schieber von seiner oberen Position in seine untere Position bewegt wird,
wobei:
- das Formgebungsverfahren einen Tiefziehschritt (220) und einen stromabwärtigen Schritt (230) nach dem Tiefziehschritt umfasst und mittels einer stromabwärtigen Presse (60) durchgeführt wird, die zu der Formgebungsanlage (10) gehört und sich von der Tiefziehpresse (40) unterscheidet,
- wenn bei dem Prägeschritt das Band (12) in dem Arbeitsvolumen der Tiefziehpresse aufgenommen, der Schieber (24) von seiner oberen in seine untere Position übergeht und auf dem Band ein Netz von Fluidzirkulationskanälen (104) prägt,
wobei das Formgebungsverfahren **dadurch gekennzeichnet ist, dass**:
- sobald das Kanalnetz (104) auf das Band (12) geprägt ist und das Band (12) dabei in dem Prägewerkzeug (42) festgehalten wird, in dem Band mittels eines Markierungswerkzeugs (224), das von dem Schieber getragen wird, eine Markierung (222) gebildet wird,
- das Band bei dem stromabwärtigen Schritt (230) mittels Positionierungselementen (238), die an der stromabwärtigen Presse (60) montiert sind und mit der Markierung zusammenwirken, positioniert wird.

2. Formgebungsverfahren nach Anspruch 1, wobei die Markierung (222) in dem Band (12) geformt wird, während der Schieber (24) für ein vorbestimmtes Zeitintervall in der unteren Position gehalten wird und das Prägewerkzeug (42) eine vorbestimmte Kraft auf das Band ausübt.

3. Formgebungsverfahren nach Anspruch 2, wobei das vorbestimmte Zeitintervall größer als 0,2 s, vorzugsweise größer als 0,3 s, bevorzugter größer als 0,4 s, ist.

4. Formgebungsverfahren nach einem der Ansprüche 2 oder 3, wobei die vorbestimmte Kraft zwischen 150 kN und 300 kN, vorzugsweise zwischen 170 kN und 250 kN und bevorzugter zwischen 180 kN und 200 kN liegt.

5. Formgebungsverfahren nach einem der Ansprüche 1 bis 4, wobei:
- das Formgebungsverfahren einen stromaufwärtigen Schritt (200) umfasst, der vor dem Tiefziehschritt (220) ist und in dessen Verlauf mittels eines zu der Formgebungsanlage (10) gehörenden primären Markierungswerkzeugs (204) eine primäre Markierung (202) in das Band (12) geformt wird,
- bei dem Tiefziehschritt (220) das Band (12) in Bezug auf die Tiefziehpresse (40) mittels Positionierungselementen (38) positioniert wird, die an der Tiefziehpresse montiert sind und mit der primären Markierung zusammenwirken.

6. Formgebungsverfahren nach Anspruch 5, wobei das primäre Markierungswerkzeug (204) auf dem Schieber (24) einer stromaufwärtigen Presse (50) montiert ist, die Teil der Formgebungsanlage (10) ist und sich von der Tiefziehpresse (40) unterscheidet.

7. Formgebungsanlage (10) von bipolaren Platten (100), wobei die Formgebungsanlage konfiguriert ist, um das Formgebungsverfahren nach einem der Ansprüche 1 bis 6 zu implementieren, umfassend mehrere Pressen (30), wobei die Pressen mindestens eine Tiefziehpresse (40) beinhalten, die konfiguriert ist, um einen Tiefziehschritt (220) zu implementieren, und eine stromabwätige Presse (60), die konfiguriert ist, um einen stromabwätigen Schritt nach dem Tiefziehschritt zu implementieren, wobei:
- jede Presse einen bewegbaren Schieber (24) umfasst, der gegenüber einem feststehenden Tisch (26) angeordnet ist, wobei der Schieber durch eine Betätigungsvorrichtung (28) zwischen einer oberen und einer unteren Position beweg wird, der Schieber und der Tisch zusammen ein Arbeitsvolumen der entsprechenden Presse begrenzen,
- wobei die Tiefziehpresse (40) Folgendes umfasst:
• ein Prägewerkzeug (42), das mit dem entsprechenden Schieber verbunden und konfiguriert ist, um auf dem Band (12) in Relief ein Netz von Fluidzirkulationskanälen (104) zu prägen, wenn der jeweilige Schieber von seiner oberen in seine untere Position übergeht, und
• ein Markierungswerkzeug (224), das von dem Schieber (24) getragen wird und konfiguriert ist, um eine Markierung (222) auf dem Band zu bilden, sobald das Kanalnetz auf das Band gedruckt ist, während das Band (12) in dem Prägewerkzeug (42) festgehalten wird,
- wobei die stromabwärtige Presse (60) Positionierungselemente (238) umfasst, die an der stromabwätigen Presse montiert und konfiguriert sind, um mit den Markierungen (222) zusammenzuwirken, die auf dem Band gebildet sind, um das Band in Bezug auf die stromabwätige Presse zu positionieren.

## Claims

1. A method of forming a polar plate (100) for electrochemical cells of a fuel cell, the method being implemented by means of a forming plant (10) comprising at least one stamping press (40), which is configured to form the polar plates in series from a metal strip (12), each polar plate being provided in an elementary section (13) of the strip, the stamping press comprising:
- a movable slider (24) arranged opposite a stationary table (26), the slider being moved by an actuation device (28) between an upper position and a lower position, the slider and the table together delimiting a working volume of the press,
- a stamping tool (42), which is connected to the slider and is configured to stamp a network of channels (104) for the circulation of fluids in relief on the strip, when the slider moves from the upper position thereof to the lower position thereof,
wherein:
- the forming method comprises a so-called stamping step (220) and a so-called downstream step (230), subsequent to the stamping step and implemented by means of a so-called downstream press (60), belonging to the forming plant (10) and distinct from the stamping press (40),
- during the stamping step, while the strip (12) is received in the working volume of the stamping press, the slider (24) moves from upper position thereof to the lower position thereof and stamps on the strip a network of circulation channels (104) for fluids,
the forming method being **characterized in that**:
- once the channel network (104) is stamped on the strip (12), while the strip (12) is held clamped in the stamping tool (42), a reference mark (222) is formed on the strip by means of a marking tool (224) carried by the slider,
- during the downstream step (230), the strip is positioned with respect to the downstream press (60) by means of positioning members (238) mounted on the downstream press and which cooperate with the reference mark.

2. The forming method according to claim 1, wherein the reference mark (222) is formed on the strip (12) while the slider (24) is held in the lowered position for a predetermined period of time while the stamping tool (42) exerts a predetermined force on the strip.

3. The forming method according to claim 2, wherein the predetermined time interval is greater than 0.2 seconds, preferably greater than 0.3 seconds, else preferably greater than 0.4 seconds.

4. The forming method according to any one of claims 2 or 3, wherein the predetermined force is comprised between 150 kN and 300 kN, preferably between 170 and 250 kN, else preferably between 180 and 200 kN.

5. The forming method according to any one of claims 1 to 4, wherein:
- the forming method comprises a so-called upstream step (200) which precedes the stamping step (220) and during which a primary reference mark (202) is formed on the strip (12) using a primary marking tool (204) belonging to the forming plant (10).
- during the stamping step (220), the strip (12) is positioned relative to the stamping press (40) by means of positioning members (38) mounted on the stamping press and which cooperate with the primary reference mark.

6. The forming method according to claim 5, wherein the primary marking tool (204) is mounted on the slider (24) of an upstream press (50), which is part of the forming plant (10) and is distinct from the stamping press (40).

7. A forming plant (10) for bipolar plates (100), the forming plant being configured to implement the forming method according to any one of claims 1 to 6 and comprising a plurality of presses (30), the presses including at least one stamping press (40), which is configured to implement a stamping step (220), and a downstream press (60), which is configured to perform a downstream step, subsequent to the stamping step, wherein:
- each press comprises a movable slider (24) arranged opposite a stationary table (26), the slider being moved by an actuation device (28) between an upper position and a lower position, the slider and the table together delimiting a working volume of the corresponding press,
- the stamping press (40) comprises:
• a stamping tool (42), which is connected to the corresponding slider and which is configured to stamp a network of channels (104) for the circulation of fluids in relief on the strip (12), when the slider moves from the upper position thereof to the lower position thereof, and
• a marking tool (224), which is carried by the slider (24) and is configured to form a reference mark (222) on the strip after the network channel is printed on the strip, while the strip (12) is held clamped in the stamping tool (42),
- the downstream press (60) comprises positioning members (238) mounted on the downstream press and configured to cooperate with reference marks (222) formed on the strip, so as to position the strip relative to the downstream press.
